# EUROPEAN PATENT APPLICATION

(11) **EP 4 578 997 A2**
(43) Date of publication of application: **02.07.2025**
(21) Application number: 24220064.0
(22) Date of filing: 16.12.2024
(51) Int. Cl.: C25D 1/04, C25D 3/38, H01M 4/66, H01M 10/052

(54) **COPPER FOIL, ELECTRODE COMPRISING THE SAME, SECONDARY BATTERY COMPRISING THE SAME, AND METHOD FOR MANUFACTURING THE SAME**

(30) Priority: 29.12.2023 KR 20230197784
(71) Applicant: SK Nexilis Co., Ltd., Jeollabuk-do 56137 (KR)
(72) Inventor: JIN, Shan Hua, Jeongeup-si 56137 (KR)
(74) Representative: Ter Meer Steinmeister & Partner

(57) **Abstract**

One embodiment of the present disclosure provides a copper foil including a copper film including 99.9 wt% or more of copper, and a protective layer disposed on the copper film, wherein the copper foil has a first room-temperature thermal expansion coefficient of 10 ppm/°C to 25 ppm/°C and a high-temperature thermal expansion coefficient of 20 ppm/°C to 35 ppm/°C. The first room-temperature thermal expansion coefficient is a thermal expansion coefficient measured in a machine direction (MD direction), and the high-temperature thermal expansion coefficient is a thermal expansion coefficient measured in the MD direction after heat-treating the copper foil at 190 °C.

## Description

This application claims the benefit of the Korean Patent Applications No. 10-2023-0197784 filed on December 29, 2023.

### BACKGROUND

### Field of the Invention

The present disclosure relates to a copper foil, an electrode including the same, a secondary battery including the same, and a method for manufacturing the same. The present disclosure relates to a copper foil in which the occurrence of curling is prevented, an electrode including the same, a secondary battery including the same, and a method for manufacturing the same.

### Discussion of the Related Art

Secondary batteries are types of energy conversion devices that convert electrical energy into chemical energy, store the chemical energy therein, and then convert the chemical energy back into the electrical energy when electricity is needed, thereby generating electricity. The secondary batteries are used as energy sources for electric vehicles as well as portable electronic products such as mobile phones, laptop computers, and the like. The secondary batteries are rechargeable and thus are also referred to as rechargeable batteries.

As secondary batteries that have economic and environmental advantages over disposable primary batteries, there are lead-acid batteries, nickel-cadmium secondary batteries, nickel hydrogen secondary batteries, and lithium secondary batteries.

In particular, lithium secondary batteries may store a relatively large amount of energy relative to the size and weight thereof compared to other secondary batteries. Accordingly, in the field of information communication devices in which portability and mobility are important, the lithium secondary batteries are preferred, and an application range thereof is also expanding to energy storage devices for hybrid vehicles and electric vehicles.

Lithium secondary batteries are repeatedly used in each cycle including charging and discharging. When a certain device is operated with a fully charged lithium secondary battery, the lithium secondary battery should have a high charge/discharge capacity in order to increase an operating time of the device. Accordingly, research to satisfy ever-increasing expectations (needs) of consumers for charge/discharge capacity of a lithium secondary battery is continuously required.

Such a secondary battery includes a negative electrode current collector made of a copper foil, and among copper foils, an electrolytic copper foil is widely used as a negative electrode current collector of a secondary battery. Along with an increase in demand for secondary batteries, there is an increase in demand for secondary batteries with high capacity, high efficiency, and high quality, and thus, there is a need for copper foils capable of improving characteristics of secondary batteries. In particular, there is a need for electrolytic copper foils that can ensure high capacity of secondary batteries and enable secondary batteries to stably maintain capacity and performance.

Meanwhile, as copper foils become smaller in thickness, the amount of active materials that can be included in the same space may be increased, and the number of current collectors may be increased, and thus, the capacity of secondary batteries can be increased. However, as the copper foils become smaller in thickness, curling occurs, and thus, when the copper foil is wound, defects such as tears or wrinkles of the copper foil occur due to curling of an edge, and accordingly, there is difficulty in manufacturing copper foils in the form of a very thin film. Accordingly, in order to manufacture a copper foil having a very thin thickness, the curling of the copper foil should be prevented.

### SUMMARY

At least one of these objects is solved by the features of the independent claim. Accordingly, the present disclosure relates to a copper foil capable of preventing the problems caused by the limitations and disadvantages of the related art described above, an electrode including the same, a secondary battery including the same, and a method for manufacturing the same.

According to an embodiment of the present disclosure, there is provided a copper foil in which wrinkles or tears are prevented by having a first room-temperature thermal expansion coefficient of 10 ppm/°C to 25 ppm/°C and a high-temperature thermal expansion coefficient of 20 ppm/°C to 35 ppm/°C.

According to an embodiment of the present disclosure, there is provided a copper foil in which wrinkles or tears are prevented by having a second room-temperature thermal expansion coefficient of 10 ppm/°C to 25 ppm/°C.

According to an embodiment of the present disclosure, there is provided a copper foil in which wrinkles or tears are prevented by having the high-temperature thermal expansion coefficient greater than each of the first and second room-temperature thermal expansion coefficients.

According to an embodiment of the present disclosure, there is provided an electrode for a secondary battery including the copper foil, in particular a copper foil according to any one of the herein described embodiments, and a secondary battery including the electrode for a secondary battery.

According to an embodiment of the present disclosure, there is provided a method for manufacturing a copper foil in which the occurrence of curling, wrinkles, or tears is prevented. The method may be a method for manufacturing a copper foil according to any one of the herein described embodiments.

In addition to the aspects of the present disclosure described above, other features and advantages of the present disclosure will be described in the following detailed description, as will be clearly understood by those skilled in the art to which the present disclosure pertains.

According to one embodiment of the present disclosure, there is provided a copper foil including a copper film including 99.9 wt% or more of copper, and a protective layer disposed on the copper film, wherein the copper foil has a first room-temperature thermal expansion coefficient of 10 ppm/°C to 25 ppm/°C and a high-temperature thermal expansion coefficient of 20 ppm/°C to 35 ppm/°C. The first room-temperature thermal expansion coefficient is a thermal expansion coefficient measured in a machine direction (MD direction), and the high-temperature thermal expansion coefficient is a thermal expansion coefficient measured in the MD direction after heat-treating the copper foil at 190 °C, e.g. for 60 minutes.

The copper foil may have a second room-temperature thermal expansion coefficient of 10 ppm/°C to 25 ppm/°C.

The second room-temperature thermal expansion coefficient may be a thermal expansion coefficient measured in a transverse direction (TD direction).

The high-temperature thermal expansion coefficient may be greater than each of the first room-temperature thermal expansion coefficient and the second room-temperature thermal expansion coefficient.

The protective layer may include at least one of a chromium compound, a silane compound, and a nitrogen compound.

According to another embodiment of the present disclosure, there is provided an electrode for a secondary battery including a copper foil, in particular a copper foil according to any one of the herein described embodiments, and an active material layer disposed on at least one surface of the copper foil.

According to still another embodiment of the present disclosure, there is provided a secondary battery including a cathode configured to provide lithium ions during charging, and anode configured to provide electrons and lithium ions during discharging, an electrolyte disposed between the cathode and the anode to provide an environment in which the lithium ions are movable, and a separator configured to electrically insulate the cathode and the anode. The anode and/or the cathode may be an electrode including a copper foil according to any one of the herein described embodiments.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a cross-sectional view of a copper foil according to one embodiment of the present disclosure;
FIG. 2 is a cross-sectional view of a copper foil according to another embodiment of the present disclosure;
FIG. 3 is a cross-sectional view of an electrode for a secondary battery according to still another embodiment of the present disclosure;
FIG. 4 is a cross-sectional view of an electrode for a secondary battery according to yet another embodiment of the present disclosure;
FIG. 5 is a schematic cross-sectional view of a secondary battery according to yet another embodiment of the present disclosure;
FIG. 6 is a device for manufacturing a copper foil according to yet another embodiment of the present disclosure; and
FIG. 7 is a schematic view illustrating an electrolyte circulation process according to the present disclosure.

### DETAILED DESCRIPTION OF THE DISCLOSURE

Hereinafter, embodiments of the present disclosure will be described in detail with reference to the accompanying drawings. However, the embodiments described below are presented only for illustrative purposes to facilitate a clear understanding of the present disclosure and do not limit the scope of the present disclosure.

Shapes, sizes, ratios, angles, numbers, and the like disclosed in the drawings for describing the embodiments of the present disclosure are illustrative, and thus the present disclosure is not limited to the details illustrated in the drawings. Throughout the present specification, the same components may be referred to by the same reference numerals. In describing the present disclosure, detailed descriptions of related known technologies will be omitted when it is determined that they may unnecessarily obscure the gist of the present disclosure.

When terms "including," "having," "consisting of," and the like described in the present specification are used, other parts may be added unless the term "only" is used herein. When a component is expressed in the singular form, the plural form is included unless otherwise specified. In addition, in interpreting a component, it is interpreted as including an error range even when not explicitly stated.

In describing a positional relationship, for example, when a positional relationship of two parts is described as being "on," "above," "below, "next to," or the like, unless "immediately" or "directly" is used, one or more other parts may be located between the two parts.

Spatially relative terms, such as "below," "beneath," "lower," "above," "upper" and the like, may be used herein for ease of description to describe one element or component's relationship to another element(s) or component(s) as illustrated in the drawings. It will be understood that the spatially relative terms are intended to include different orientations of the element in use or operation in addition to the orientation illustrated in the drawings. For example, when an element in the drawings is turned over, an element described as being "above" or "upper" relative to another element will then be "below" or "lower" relative to the other element. Thus, the exemplary term "below" may include both above and below orientations. Likewise, the exemplary terms "above" or "upper" may include both above and below orientations.

In describing a temporal relationship, for example, when a temporal relationship is described as being "after," "subsequent," "next to," "prior to," or the like, unless "immediately" or "directly" is used, cases that are not continuous may also be included.

In order to describe various components, terms such as "first," "second," and the like are used, but these components are not limited by these terms. These terms are only used to distinguish one component from another component. Therefore, a first component described below may be a second component within the technical idea of the present disclosure.

The term "at least one" should be understood to include all possible combinations from one or more related items. For example, the meaning of "at least one of first, second, and third items" may mean all combinations of two or more items of the first, second and third items as well as each of the first, second and third items.

The features of various embodiments of the present disclosure may be partially or wholly coupled to or combined with each other, and may be various technically linked or operated, and each of the embodiments may be implemented independently of each other or may be implemented together in a related relationship.

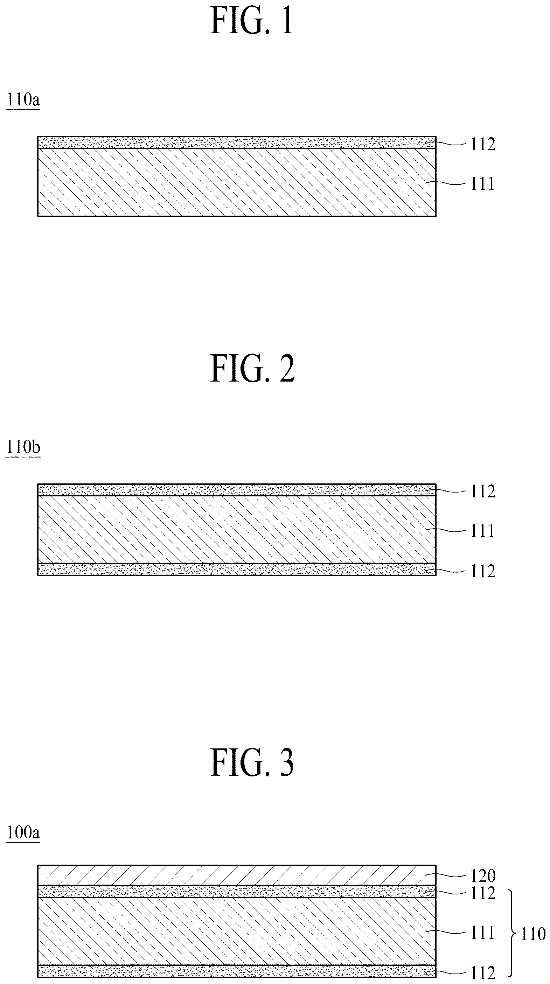

FIG. 1 is a cross-sectional view of a copper foil 110a according to one embodiment of the present disclosure.

Referring to FIG. 1, the copper foil 110a of the present disclosure includes a copper film 111 including 99.9 wt% more of copper. Referring to FIG. 1, the copper foil 110a of the present disclosure includes the copper film 111 and a protective layer 112 formed on the copper film 111. In FIG. 1, a configuration in which the protective layer 112 is disposed on one surface of the copper film 111 is illustrated. However, one embodiment of the present disclosure is not limited thereto, and the protective layer 112 may be disposed on each of both surfaces of the copper film 111 (see FIG. 2).

The copper film 111 may be formed on a rotating anode drum through electroplating, and may include a shiny surface that is in direct contact with the rotating anode drum in an electroplating process and a matte surface opposite to the shiny surface.

The protective layer 112 is formed by electrodepositing an anticorrosion material on the copper film 111. The anticorrosion material may include at least one of a chromium compound, a silane compound, and a nitrogen compound. The protective layer 112 prevents oxidation and corrosion of the copper film 111 and improves heat resistance thereof, thereby increasing a lifespan of a finished product including a copper foil 110 itself as well as a lifespan of the copper foil 110.

The copper foil 110 described below may correspond to the copper foils 110a and 110b of FIGS. 1 and 2.

According to one embodiment of the present disclosure, the copper foil 110 may have a first room-temperature thermal expansion coefficient of 10 ppm/°C to 25 ppm/°C and a high-temperature thermal expansion coefficient of 20 ppm/°C to 35 ppm/°C.

At this time, the first room-temperature thermal expansion coefficient refers to a thermal expansion coefficient measured in a machine direction (MD direction) while heating the copper foil from 30 °C to 330 °C at a rate of 5 °C/min using a thermomechanical analyzer (TMA), and the high-temperature thermal expansion coefficient refers to a thermal expansion coefficient measured in the MD direction while heating the copper foil from 30 °C to 330 °C at a rate of 5 °C/min using the thermomechanical analyzer (TMA) after treating the copper foil at 190°C for 60 minutes.

Specifically, when the first room-temperature thermal expansion coefficient is in the range of 10 ppm/°C to 25 ppm/°C and the high-temperature thermal expansion coefficient is in the range of 20 ppm/°C to 35 ppm/°C, the occurrence of wrinkles or tears is prevented during the manufacturing process of the copper foil 110.

On the other hand, when the first room-temperature thermal expansion coefficient is less than 10 ppm/°C or the high-temperature thermal expansion coefficient is less than 20 ppm/°C, a dimensional change due to temperature increase becomes small, and thus, wrinkles or tears may occur due to high-temperature or high-pressure environments during the manufacturing process of a secondary battery.

In addition, when the first room-temperature thermal expansion coefficient exceeds 25 ppm/°C or the high-temperature thermal expansion coefficient exceeds 35 ppm/°C, the thermal expansion coefficient becomes excessively high, and thus, wrinkles or tears may occur in the copper foil due to high-temperature or high-pressure environments during the manufacturing process of a secondary battery.

According to one embodiment of the present disclosure, the copper foil 110 may have a second room-temperature thermal expansion coefficient of 10 ppm/°C to 25 ppm/°C.

At this time, the second room-temperature thermal expansion coefficient refers to a thermal expansion coefficient measured in a transverse direction (TD direction) using a TMA while heating the copper foil from 30 °C to 330 °C at a rate of 5 °C/min.

Specifically, when the second room-temperature thermal expansion coefficient of the copper foil 110 according to one embodiment of the present disclosure is in the range of 10 ppm/°C to 25 ppm/°C, the occurrence of wrinkles or tears during the manufacturing process of the copper foil 110 is prevented.

On the other hand, when the second room-temperature thermal expansion coefficient is less than 10 ppm/°C, a dimensional change due to temperature increase becomes small, and thus, wrinkles or tears may occur due to high-temperature or high-pressure environments during the manufacturing process of a secondary battery.

In addition, when the second room-temperature thermal expansion coefficient exceeds 25 ppm/°C, the thermal expansion coefficient becomes excessively high, and thus, wrinkles or tears may occur in the copper foil due to high-temperature or high-pressure environments during the manufacturing process of a secondary battery.

Further, according to one embodiment of the present disclosure, the high-temperature thermal expansion coefficient may be greater than each of the first room-temperature thermal expansion coefficient and the second room-temperature thermal expansion coefficient.

The copper foil 110 according to one embodiment of the present disclosure has a thickness of 4 µm to 35 µm. When the copper foil 110 is used as a current collector of an electrode in a secondary battery, as the thickness of the copper foil 110 becomes smaller, more current collectors can be accommodated in the same space, which is advantageous for high capacity of the secondary battery. However, the manufacture of the copper foil 110 having a thickness of less than 4 µm causes a decrease in workability.

On the other hand, when the secondary battery is manufactured with the copper foil 110 having a thickness exceeding 35 µm, it becomes difficult to achieve high capacity due to the thick copper foil 110.

Hereinafter, an electrode 100 including the copper foil 110 of the present disclosure and a secondary battery including the electrode 100 will be described in detail.

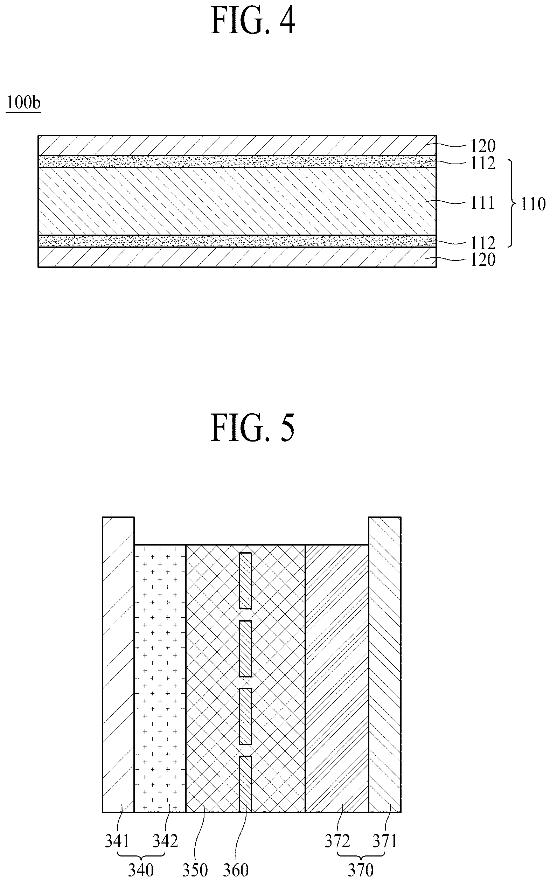

FIG. 3 is a cross-sectional view of an electrode 100a for a secondary battery according to one embodiment of the present disclosure. FIG. 4 is a cross-sectional view of an electrode 100b for a secondary battery according to another embodiment of the present disclosure.

As illustrated in FIG. 3, the electrode 100a for a secondary battery according to one embodiment of the present disclosure includes the copper foil 110 of one of the above-described embodiments of the present disclosure and an active material layer 120.

FIG. 3 illustrates a configuration in which the active material layer 120 is formed on one surface of the copper foil 110. However, the present disclosure is not limited thereto, and referring to FIG. 4, the active material layer 120 may be formed on each of both surfaces of the copper foil 110.

Generally, in a lithium secondary battery, an aluminum foil is used as a cathode current collector coupled to a cathode active material, and the copper foil 110 is used as an anode current collector coupled to an anode active material.

According to one embodiment of the present disclosure, the electrode 100 for a secondary battery is an anode, the copper foil 110 is used as an anode current collector, and the active material layer 120 includes an anode active material.

In order to secure high capacity of a secondary battery, the active material layer 120 of the present disclosure may be formed of a composite of carbon and metal. The metal may include, for example, at least one of silicon (Si), germanium (Ge), tin (Sn), lithium (Li), zinc (Zn), magnesium (Mg), cadmium (Cd), cerium (Ce), nickel (Ni), and iron (Fe), and preferably, may include Si and/or Sn.

FIG. 5 is a schematic cross-sectional view of a secondary battery according to one embodiment of the present disclosure.

Referring to FIG. 5, the secondary battery includes a cathode 370, an anode 340, an electrolyte 350 disposed between the cathode 370 and the anode 340 to provide an environment in which ions are movable, and a separator 360 electrically insulating the cathode 370 and the anode 340. Here, the ions moving between the cathode 370 and the anode 340 are, for example, lithium ions. The separator 360 separates the cathode 370 and the anode 340 in order to prevent charges generated in one electrode from being uselessly consumed by moving to another electrode through the inside of the secondary battery. Referring to FIG. 5, the separator 360 is disposed in the electrolyte 350.

The cathode 370 includes a cathode current collector 371 and a cathode active material layer 372, and an aluminum foil may be used as the cathode current collector 371.

The anode 340 includes an anode current collector 341 and an anode active material layer 342, and the copper foil 110 may be used as the anode current collector 341.

According to one embodiment of the present disclosure, the copper foil 110 disclosed in FIGS. 1 or 2 may be used as the anode current collector 341. In addition, the electrode 100a or 100b for a secondary battery illustrated in FIG. 3 or 4 may be used as the anode 340 of the secondary battery illustrated in FIG. 5.

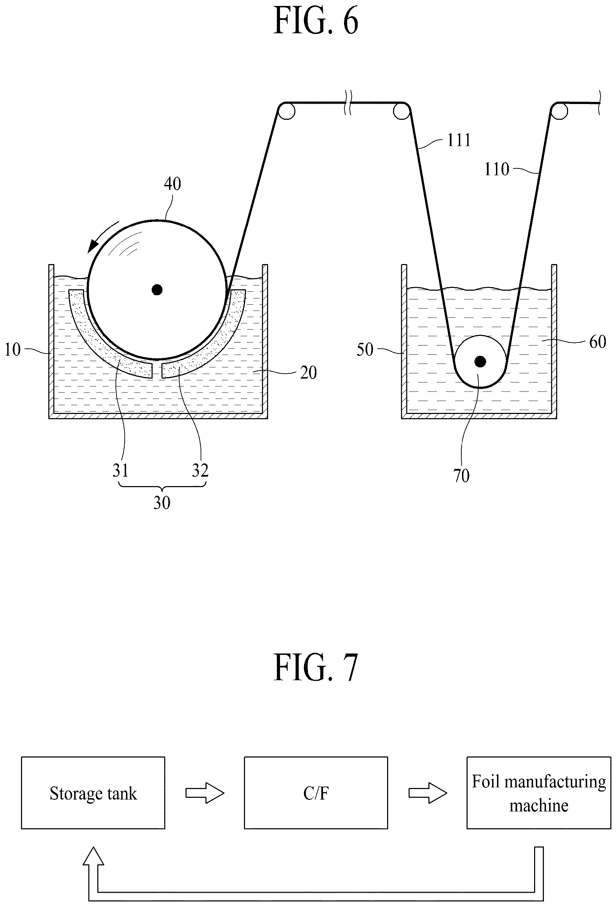

Hereinafter, a method for manufacturing the copper foil 110 of the present disclosure will be described in detail with reference to FIGS. 6 and 7.

The method for manufacturing the copper foil 110 of the present disclosure includes forming a copper film 111, and forming a protective layer 112 on the copper film 111.

The method of the present disclosure includes forming the copper film 111 on a rotating anode drum 40 by electrically conducting a cathode plate 30 and the rotating anode drum 40, which are disposed to be spaced apart from each other in an electrolyte 20 in an electrolytic cell 10.

As illustrated in FIG. 6, the cathode plate 30 may include first and second cathode plates 31 and 32 electrically insulated from each other.

The forming of the copper film 111 may be performed by forming a seed layer through electrical conduction between the first cathode plate 31 and the rotating anode drum 40, and then growing the seed layer through electrical conduction between the second cathode plate 32 and the rotating anode drum 40.

A current density provided by each of the first and second cathode plates 31 and 32 may be 30 to 130 ASD (A/dm2).

When the current density provided by each of the first and second cathode plates 31 and 32 is less than 30 ASD, a surface roughness of the copper foil 110 is reduced, and thus an adhesion between the copper foil 110 and the active material layer 120 may not be sufficient.

On the other hand, when the current density provided by each of the first and second cathode plates 31 and 32 is greater than 130 ASD, a surface of the copper foil 110 may be rough, and thus the active material may not be smoothly coated.

The surface characteristics of the copper film 111 may be changed according to a buffing or polishing degree of a surface of the rotating anode drum 40. For example, the surface of the rotating anode drum 40 may be polished using a polishing brush having a grit of #800 to #3000.

In the process of forming the copper film 111, the electrolyte 20 is maintained at a temperature of 40 °C to 60 °C. More specifically, the temperature of the electrolyte 20 may be maintained at 50 °C or higher. At this time, the physical, chemical, and electrical characteristics of the copper film 111 may be controlled by adjusting a composition of the electrolyte 20.

According to one embodiment of the present disclosure, the electrolyte 20 may include copper ions, sulfuric acid, chlorine (Cl), collagen, gelatin, and an organic additive.

In order to facilitate the formation of the copper film 111 through copper electrodeposition, the concentration of the copper ions and the concentration of the sulfuric acid in the electrolyte 20 are adjusted in a range of 70 g/L to 150 g/L and a range of 80 g/L to 150 g/L, respectively.

In one embodiment of the present disclosure, the chlorine (Cl) includes all of chlorine ions (Cl-) and chlorine atoms present in a molecule. The chlorine (Cl) may, for example, be used to remove silver (Ag) ions introduced into the electrolyte 20 in the process of forming the copper film 111. Specifically, the chlorine (Cl) may precipitate silver (Ag) ions in the form of silver chloride (AgCl). The silver chloride (AgCl) may be removed through filtration.

When the concentration of the chlorine (Cl) is less than 15 ppm, the silver (Ag) ions are not removed well. On the other hand, when the concentration of the chlorine (Cl) exceeds 25 ppm, unnecessary reaction may occur due to the excessive amount of chlorine (Cl). Accordingly, the concentration of the chlorine (Cl) in the electrolyte 20 is controlled in a range of 15 ppm to 25 ppm.

According to one embodiment of the present disclosure, an electrolyte 20 may include collagen and gelatin. Specifically, the electrolyte 20 may include 1 ppm to 15 ppm of collagen and 0.1 ppm to 5 ppm of gelatin.

In one embodiment of the present disclosure, collagen and gelatin are added to control the thermal expansion coefficient of the copper foil according to the present disclosure. In order to obtain thermal expansion coefficient properties according to the present disclosure, the electrolyte 20 needs to include 1 ppm to 15 ppm of collagen and 0.1 ppm to 5 ppm of gelatin.

More preferably, the collagen and gelatin included in the electrolyte 20 need to be added at a concentration ratio of 10:1 to 3:1. At this time, the collagen may have a molecular weight of 2,000 to 10,000, and the gelatin may have a molecular weight of 10,000 to 100,000.

When the concentration ratio of the collagen and gelatin included in the electrolyte 20 falls outside the above range, an excessive amount of high-molecular-weight gelatin may cause excessively high strength, whereas an excessive amount of low-molecular-weight collagen relative to the gelatin may cause excessively low strength.

According to one embodiment of the present disclosure, the electrolyte 20 may include an organic additive.

The organic additive included in the electrolyte 20 includes at least one of a polishing agent (component A) and a moderator (component B).

The organic additive may include one or more of the polishing agent (component A) and the moderator (component B), and may also include both components.

The polishing agent (component A) includes sulfonic acid or a metal salt thereof. The polishing agent (component A) may have a concentration of 1 ppm to 15 ppm in the electrolyte 20.

The polishing agent (component A) may increase an amount of electric charges of the electrolyte 20 to improve an electrodeposition speed of copper, may improve the curling characteristics of the copper foil, and may increase the gloss of the copper foil 110. When the concentration of the polishing agent (component A) is less than 1 ppm, the gloss of the copper foil 110 may decrease, and when the concentration of the polishing agent (component A) exceeds 15 ppm, the copper foil 110 may experience weight changes after immersion, or issues such as changes in surface roughness may occur.

The polishing agent may include, for example, at least one selected from among bis-(3-sulfopropyl)-disulfide disodium salt, 3-mercapto-1-propanesulfonic acid, 3-(N,N-dimethylthiocarbamoyl)-thiopropanesulfonate sodium salt, 3-[(amino-iminomethyl)thio]-1-propanesulfonate sodium salt, O-ethyldithiocarbonato-S-(3-sulfopropyl)-ester sodium salt, 3-(benzothiazolyl-2-mercapto)-propyl-sulfonic acid sodium salt, and ethylenedithiodipropylsulfonic acid sodium salt.

The moderator (component B) includes a non-ionic water-soluble polymer. The moderator (component B) may have a concentration of 0.1 ppm to 15 ppm in the electrolyte 20.

The moderator (component B) reduces the electrodeposition speed of copper to prevent a rapid increase in roughness and a decrease in strength of the copper foil 110. This moderator (component B) is referred to as an inhibitor or suppressor.

When the concentration of the moderator (component B) is less than 0.1 ppm, the roughness of the copper foil 110 may increase sharply, and a surface state of the copper foil 110 may be changed. On the other hand, although the concentration of the moderator (component B) exceeds 15 ppm, there is almost no change in physical properties such as the appearance, gloss, roughness, strength, and elongation of the copper foil 110. Accordingly, without increasing manufacturing costs and wasting raw materials due to an unnecessary increase in concentration of the moderator (component B), the concentration of the moderator (component B) may be adjusted in a range of 0.1 ppm to 15 ppm.

The moderator (component B) may include, for example, at least one non-ionic water-soluble polymer selected from among polyethylene glycol (PEG), polypropylene glycol, a polyethylene polypropylene copolymer, polyglycerin, polyethylene glycol dimethyl ether, hydroxyethylene cellulose, polyvinyl alcohol, stearic acid polyglycol ether, and stearyl alcohol polyglycol ether. However, the type of the moderator is not limited thereto, and other non-ionic water-soluble polymers usable to manufacture the high strength copper foil 110 may be used as the moderator.

When the copper film 111 is formed, a flow rate of the electrolyte 20 supplied into the electrolytic cell 10 may be 41 m³/hour to 45 m³/hour.

FIG. 7 is a schematic view illustrating an electrolyte circulation process according to the present disclosure.

According to one embodiment of the present disclosure, preparing an electrolyte may include filtering (carbon filtration (C/F)) a first electrolyte transferred from a storage tank with carbon to form a second electrolyte, and adding collagen and gelatin to the filtered second electrolyte to prepare the electrolyte.

Specifically, the first electrolyte transferred from the storage tank may include copper ions, sulfuric acid, chlorine, an organic additive, and the like.

The process of filtering (C/F) the first electrolyte using carbon refers to removing organic and inorganic impurities present in the first electrolyte.

According to one embodiment of the present disclosure, the second electrolyte refers to an electrolyte obtained by filtering the first electrolyte using carbon.

According to one embodiment of the present disclosure, collagen and gelatin may be added to the second electrolyte to form the electrolyte. The additive included in the electrolyte is already described above and thus is omitted from description. Specifically, collagen and gelatin are added after the filtering (C/F) process. When collagen and gelatin are added after the filtering (C/F) process, the degradation of the collagen and the gelatin is prevented, which is effective in improving the properties according to the present disclosure.

The electrolyte formed by adding collagen and gelatin is contained in the electrolytic cell 10, and a copper foil is manufactured using a foil manufacturing machine that includes a rotating anode drum 40 disposed in the electrolytic cell 10 and a cathode plate 30 disposed to be spaced apart from the rotating anode drum 40.

In addition, in order to maintain the cleanliness of the electrolyte 20, a copper (Cu) wire used as a raw material for the electrolyte 20 may be cleaned.

According to one embodiment of the present disclosure, preparing the electrolyte 20 may include heat-treating a Cu wire, acid-cleaning the heat-treated Cu wire, water-cleaning the acid-cleaned Cu wire, and inputting the water-cleaned Cu wire into sulfuric acid for an electrolyte.

More specifically, in order to maintain the cleanliness of the electrolyte 20, a Cu wire with a high purity (99.9% or more) is heat-treated in an electric furnace at a temperature of 750 °C to 850 °C to burn various organic impurities attached to the Cu wire, the heat-treated Cu wire is acid-cleaned using a 10% sulfuric acid solution for 10 to 20 minutes, and the acid-cleaned Cu wire is then water-cleaned using distilled water, thereby preparing copper for manufacturing the electrolyte 20. The water-cleaned Cu wire may be input into sulfuric acid for an electrolyte to prepare the electrolyte 20.

According to one embodiment of the present disclosure, in order to satisfy the characteristics of the copper foil 110, a concentration of total organic carbon (TOC) in the electrolyte 20 is controlled to be 300 ppm or less. That is, the electrolyte 20 may have a TOC concentration of 300 ppm or less.

The copper film 111 thus prepared may be cleaned in a cleaning bath.

For example, an acid cleaning process for removing impurities on a surface of the copper film 111, for example, resin components or natural oxides, and a water cleaning process for removing acidic solutions used for the acid cleaning may be sequentially performed. The cleaning process may be omitted.

Next, the protective layer 112 is formed on the copper film 111.

Referring to FIG. 6, the method may further include immersing the copper film 111 in an anticorrosion solution 60. When the copper film 111 is immersed in the anticorrosion solution 60, the copper film 111 may be guided by a guide roll disposed in the anticorrosion solution 60.

As described above, the anticorrosion solution 60 may include at least one of a chromium compound, a silane compound, and a nitrogen compound. For example, the copper film 111 may be immersed in a potassium dichromate solution of 1 g/L to 10 g/L at room temperature for 1 to 30 seconds.

Meanwhile, the protective layer 112 may include a silane compound by silane treatment or a nitrogen compound by nitrogen treatment.

The copper foil 110 is formed by forming the protective layer 112.

At least one anode active material selected from the group consisting of carbon, a metal (Me) of Si, Ge, Sn, Li, Zn, Mg, Cd, Ce, Ni or Fe, an alloy including the metal (Me), an oxide (MeOx) of the metal (Me), and a complex of the metal (Me) and carbon is coated on one surface or both surfaces the copper foil 110 of the present disclosure prepared through the method as described above to prepare an electrode (i.e., anode) for a secondary battery of the present disclosure.

For example, 1 to 3 parts by weight of styrene butadiene rubber (SBR) and 1 to 3 parts by weight of carboxymethyl cellulose (CMC) are mixed with 100 parts by weight of carbon for an anode active material to prepare a slurry using distilled water as a solvent. Subsequently, the slurry is applied to the copper foil 110 using a doctor blade to a thickness of 20 µm to 60 µm and pressed at 110 °C to 130 °C and at a pressure of 0.5 to 1.5 ton/cm².

A secondary battery may be manufactured using the electrode (anode) for a secondary battery of the present disclosure prepared through the method as described above, together with the conventional cathode, electrolyte, and separator.

Hereinafter, the present disclosure will be described in detail with reference to examples and comparative examples. However, the examples described below are only for the understanding of the present disclosure, and the scope of the present disclosure is not limited to these manufacturing examples.

### Examples 1 to 4 and Comparative Examples 1 to 4

A copper foil was prepared using a foil manufacturing machine including an electrolytic cell 10, a rotating anode drum 40 disposed in the electrolytic cell 10, and a cathode plate 30 disposed to be spaced apart from the rotating anode drum 40. An electrolyte 20 was a copper sulfate solution. A concentration of copper ions in the electrolyte 20 was set to 87 g/L, a concentration of sulfuric acid was set to 110 g/L, a temperature of the electrolyte was set to 55 °C, and a current density was set to 60 ASD.

Further, a concentration of chlorine (Cl) included in the electrolyte 17 was maintained at 20 ppm, and concentrations of collagen, gelatin, and organic additives are as shown in Table 1 below. At this time, the electrolyte was filtered using carbon, and then, collagen and gelatin were added to the filtered electrolyte.

In the organic additive, bis-(3-sulfopropyl)-disulfide disodium salt (SPS) was used as a polishing agent (component A), PEG was used as a moderator (component B), and molecular weights of collagen and gelatin were 3,500 and 10,000, respectively.

A current at a current density of 60 ASD was applied between the rotating anode drum 40 and the cathode plate 30 to prepare a copper film 111. Thereafter, the copper film 111 was immersed in an anticorrosion solution for about two seconds to treat both surfaces of the copper film 111 with chromium to form a protective layer 112, thereby preparing the copper foil. An anticorrosion solution containing chromic acid as a main component was used as the anticorrosion solution, and the concentration of chromic acid was 5 g/L.

As a result, the copper foils of Examples 1 to 4 and Comparative Examples 1 to 4 were prepared. At this time, the thickness of the manufactured copper foil was 8 µm.

**[Table 1]**

| | Collagen (ppm) | Gelatin (ppm) | SPS (ppm) | PEG (ppm) |
|---|---|---|---|---|
| Example 1 | 14 | 2 | 5 | 5 |
| Example 2 | 13 | 3 | 5 | 5 |
| Example 3 | 6 | 1 | 5 | 5 |
| Example 4 | 8 | 1 | 1 | 12 |
| Comparative Example 1 | 15 | 7 | 5 | 5 |
| Comparative Example 2 | 20 | 5 | 5 | 5 |
| Comparative Example 3 | 15 | 3 | 50 | 5 |
| Comparative Example 4 | 15 | 3 | 5 | 50 |

**[Table 2]**

| Category | First room-temperature thermal expansion coefficient (ppm/°C) | Second room-temperature thermal expansion coefficient (ppm/°C) | High-temperature thermal expansion coefficient (ppm/°C) | Occurrence of curling |
|---|---|---|---|---|
| Example 1 | 13 | 14 | 25 | Did not occur |
| Example 2 | 15 | 15 | 27 | Did not occur |
| Example 3 | 22 | 23 | 33 | Did not occur |
| Example 4 | 23 | 23 | 34 | Did not occur |
| Comparative Example 1 | 9 | 12 | 38 | Occurred |
| Comparative Example 2 | 12 | 15 | 19 | Occurred |
| Comparative Example 3 | 27 | 29 | 45 | Occurred |
| Comparative Example 4 | 30 | 34 | 47 | Occurred |

For the copper foils of Examples 1 to 4 and Comparative Examples 1 to 4 manufactured as described above, i) first room-temperature thermal expansion coefficient, ii) second room-temperature thermal expansion coefficient, iii) high-temperature thermal expansion coefficient, and iv) occurrence of curling were checked.

The copper foil was cut to obtain a 5 mm x 5 mm sample.

### i) First room-temperature thermal expansion coefficient

The first room-temperature thermal expansion coefficient refers to a thermal expansion coefficient measured in an MD direction of the copper foil sample.

In this case, measurement conditions for the thermal expansion coefficient were as follows.
- Measuring equipment: Thermomechanical analyzer (Product: Seiko Exstar 6000 (TMA 6100))
- Initial temperature: 30 °C
- Final temperature: 330 °C
- Heating rate: 5 °C/min
- Applied load: 0.05 N

### ii) Second room-temperature thermal expansion coefficient

The second room-temperature thermal expansion coefficient refers to a thermal expansion coefficient measured in a TD direction of the copper foil sample.

In this case, a method for measuring the thermal expansion coefficient was the same as that for the first room-temperature thermal expansion coefficient, except for the measurement direction.

### iii) High-temperature thermal expansion coefficient

The high-temperature thermal expansion coefficient refers to a thermal expansion coefficient measured in the MD direction after heat-treating the copper foil at 190 °C for 60 minutes.

Specifically, the sample was heat-treated at 190 °C for 60 minutes and cooled, and then the thermal expansion coefficient of the sample was measured in the same manner as the measurement method for the room-temperature thermal expansion coefficient. The process of cooling the sample was carried out by leaving the sample at room temperature.

According to the present disclosure, by preventing the occurrence of wrinkles or tears in a copper foil during a manufacturing process and using the copper foil to manufacture intermediate parts, such as flexible printed circuit boards (FPCBs) and secondary batteries, and final products, productivity of the intermediate parts as well as the final products can be improved.

### iv) Occurrence of curling

After 100 charge and discharge cycles, the secondary battery was disassembled to observe whether a wrinkle or tear occurred on the copper foil. When the copper foil was wrinkled or torn, the copper foil was labeled as "Occurred," and when the copper foil was not wrinkled or torn, the copper foil was labeled as "Did not occur."

Referring to Tables 1 and 2, no curling occurred in the copper foils of Examples 1 to 4, whereas curling occurred in the copper foils of Comparative Examples 1 to 4.

It will be apparent to those skilled in the art that the present disclosure described above is not limited by the above-described embodiments and the accompanying drawings and that various substitutions, modifications, and variations can be made in the present disclosure without departing from the scope of the present disclosure. Accordingly, the scope of the present disclosure is defined by the accompanying claims, and it is intended that all variations and modifications derived from the meaning, scope, and equivalent concept of the claims fall within the scope of the present disclosure.

### Description of Reference Numerals

100: electrode for a second battery
110, 110a, and 110b: copper foil
111: copper film
112: protective layer
120: active material layer
10: electrolytic bath
20: electrolyte

## Claims

1. A copper foil comprising:
a copper film including 99.9 wt% or more of copper; and
a protective layer disposed on the copper film,
wherein the copper foil has a first room-temperature thermal expansion coefficient of 10 ppm/°C to 25 ppm/°C and a high-temperature thermal expansion coefficient of 20 ppm/°C to 35 ppm/°C,
wherein the first room-temperature thermal expansion coefficient is a thermal expansion coefficient measured in a machine direction (MD direction), and
the high-temperature thermal expansion coefficient is a thermal expansion coefficient measured in the MD direction after heat-treating the copper foil at 190 °C for 60 minutes.

2. The copper foil of claim 1, wherein the copper foil has a second room-temperature thermal expansion coefficient of 10 ppm/°C to 25 ppm/°C,
wherein the second room-temperature thermal expansion coefficient is a thermal expansion coefficient measured in a transverse direction (TD direction).

3. The copper foil of claim 2, wherein the high-temperature thermal expansion coefficient is greater than each of the first room-temperature thermal expansion coefficient and the second room-temperature thermal expansion coefficient.

4. The copper foil of claim 1, 2 or 3, wherein the protective layer includes at least one of a chromium compound, a silane compound, and a nitrogen compound.
